# EUROPÄISCHE PATENTSCHRIFT

(11) **EP 2 680 416 B1**
(45) Veröffentlichungstag und Bekanntmachung des Hinweises auf die Patenterteilung: **24.10.2018**
(21) Anmeldenummer: 12173913.0
(22) Anmeldetag: 27.06.2012
(51) Int. Cl.: H02K 23/00, H02K 3/52

(54) **Universalmotor**
Universal motor
Moteur universel

(43) Veröffentlichungstag der Anmeldung: 01.01.2014
(73) Patentinhaber: C. & E. Fein GmbH, 73529 Schwäbisch Gmünd-Bargau (DE)
(72) Erfinder: Maier, Christoph, 73274 Notzingen (DE); Meyer, Christoph, 70599 Stuttgart (DE); Wallitschka, Peter, 73614 Schorndorf (DE)
(74) Vertreter: Roos, Michael

(56) Entgegenhaltungen:
- DE-A1- 2 546 528
- DE-A1- 3 635 067
- DE-B- 1 003 338
- DE-C- 364 899

## Beschreibung

Die Erfindung betrifft einen Universalmotor, mit einem Stator, in dem mindestens zwei parallel geschaltete Feldspulen aufgenommen sind, wobei zur Parallelschaltung der Feldspulen Anschlussleitungen vorgesehen sind, die am Stator in den Pollücken zwischen den Feldspulen verlegt sind.

Ein derartiger Universalmotor ist aus der DE 1 003 338 B bekannt,

Hierbei sind verschiedene Verschaltungen der insgesamt vier Feldspulen offenbart. Wie allerdings die elektrische Kontaktierung der Feldspulen und die Verlegung der Anschlussleitungen im Einzelnen erfolgen soll, ist hieraus nicht entnehmbar.

Aus der DE 36 35 067 A1 ist ein weiterer Universalmotor bekannt, der zwei parallel geschaltete Feldspulen aufweist.

Hierbei werden zum Anschluss der Feldwicklungen an diesen Steckkontakte vorgesehen, auf die Anschlussstecker aufgesteckt werden können.

Wie allerdings im Detail die Verdrahtung des Universalmotors erfolgt, ist hieraus nicht entnehmbar.

Universalmotoren weisen in der Regel zwei Feldspulen auf. Die Feldspulen können in Reihe geschaltet sein oder auch parallel geschaltet sein. Die Parallelschaltung der Feldspulen hat den Vorteil, dass kleinere Steckverbinder an den Polendscheiben eingesetzt werden können, da kleinere Ströme über die Steckkontakte fließen. Dies ist insbesondere für Maschinen vorteilhaft, die mit 120 V betrieben werden sollen, da sie bei höheren Leistungen mit dickeren Wickeldrähten realisiert werden müssen. Bei höheren Leistungen lassen die dicken Drähte an den Anschlüssen der Polendscheibe auch nicht ohne Weiteres durch Crimpen verbinden, da die Steckkontakte nur bis zu gewissen maximalen Drahtdurchmessern von den Herstellern zugelassen sind. Durch eine Parallelschaltung der Feldspulen können kleinere Drahtdurchmesser realisiert werden.

Des Weiteren sind zum Formen eines gut anliegenden Wickelkopfs für eine automatische Wicklung geringere Drahtzugkräfte bei geringerem Drahtdurchmesser notwendig, was zu einem kleineren Einfall an den Polendscheiben führt. Hierdurch können die Polendscheiben mit kleineren Wandstärken ausgeführt werden. Der Wickelkopf baut sich bei geringeren Durchmessern kompakter auf. Bei Universalmotoren können die Feldwicklungen parallel und asymmetrisch zum Anker geschaltet werden. Allerdings ist hierbei eine zusätzliche Verbindungsstelle notwendig.

Im Stand der Technik ist es bekannt, bei parallel geschalteten Feldspulen die Litzen der Anschlussleitungen in der Montage nach dem Einpressen des Polpakets in das Motorgehäuse zweimal an einem Kohlehalter zu stecken und auf der gegenüberliegenden Seite zu vercrimpen. Hierbei muss dann zusätzlich noch ein Schrumpfschlauch übergezogen werden. Dies hat zur Folge, dass diese durch Benutzung bekannt gewordene Lösung einen relativ hohen Montageaufwand erfordert. Muss das Polpaket getauscht werden, so muss außerdem zunächst die Verbindung getrennt werden, bevor das Polpaket aus dem Motorgehäuse genommen werden kann. Im Reparaturfall muss bei einem Tausch die Vercrimpung von Hand wieder angebracht werden. Ein einfaches Austauschen ist daher nicht möglich. Sofern das Polpaket getauscht werden muss, muss zwangsweise die Verbindung händisch hergestellt werden und der Schrumpfschlauch übergezogen werden. Dies führt zu einer nicht servicefreundlichen Lösung.

Vor diesem Hintergrund liegt der Erfindung die Aufgabe zugrunde, einen Universalmotor zu schaffen, bei dem parallel geschaltete Feldspulen auf möglichst einfache und zuverlässige Weise angeschlossen werden können. Hierbei soll auch eine möglichst servicefreundliche Lösung ermöglicht werden.

Diese Aufgabe wird erfindungsgemäß durch die Verwendung eines Y-Kabels zum Anschluss zweier parallel geschalteter Feldspulen bei einem Universalmotor gemäß Anspruch 1 gelöst.

Auf diese Weise wird es ermöglicht, die Feldspulen an ihren Anschlussenden jeweils zunächst mit Anschlussleitungen zu versehen und dann zusammen mit den Anschlussleitungen in den Stator einzubauen.

Auf diese Weise gestalten sich die Montage der Feldspulen am Stator und die Parallelschaltung der Feldspulen besonders einfach. Der Stator kann erfindungsgemäß als fertige Baueinheit mit den Feldspulen und der Anschlussleitungen zur Parallelschaltung der Feldspulen hergestellt werden. Die komplette Stator-Baueinheit kann sodann am Motorgehäuse eingebaut werden. Sollte im Wartungsfalle der Austausch einer Feldspule erforderlich werden, so kann diese nach Lösen der Anschlussleitungen ohne Weiteres aus dem Stator herausgezogen werden, ausgetauscht werden, mit neuen Anschlussleitungen versehen werden und wieder am Stator eingebaut werden.

Erfindungsgemäß sind die Feldspulen jeweils mittels eines Y-Kabels angeschlossen.

Die Verwendung von Y-Kabeln zur Herstellung der Parallelschaltung zwischen den Feldspulen und zur Bereitstellung der Anschlussleitungen stellt eine besonders einfache und kostengünstige Maßnahme dar, um einen zuverlässigen Anschluss der Feldspulen gleichzeitig mit deren Parallelschaltung zu bewirken.

Erfindungsgemäß weist jedes Y-Kabel eine erste Anschlussleitung auf, die mit einer zweiten Anschlussleitung über eine elektrisch leitende Verbindung verbunden ist, wobei zumindest an einer Seite die erste und zweite Anschlussleitung mit einem Verbinder, vorzugsweise einem Steckverbinder versehen ist.

Erfindungsgemäß ist das Y-Kabel an den Anschlüssen der Verbinder mit ersten Schrumpfschläuchen versehen.

Auf diese Weise ist die Montage erleichtert, da sich das Y-Kabel im Bereich der Schrumpfschläuche leichter ergreifen lässt, um die Verbinder anschließen zu können.

Weiter sind erfindungsgemäß die am Stator montierten Y-Kabel zusätzlich an der Verbindung zwischen den beiden Anschlussleitungen und der Anschlüsse der Verbinder durch zweite Schrumpfschläuche umschlossen.

Hierdurch kann ein Langzeitschutz und ein staubsicherer Abschluss sowohl an den Anschlüssen der Verbinder als auch an der Verbindung zwischen den Anschlussleitungen gewährleistet werden. Hierdurch ergibt sich eine hohe Zuverlässigkeit im Langzeitbetrieb.

Ferner sind vorzugsweise die erste und die zweite Anschlussleitung miteinander vercrimpt.

Auf diese Weise wird eine besonders einfache und kostengünstige Verbindung von hoher Zuverlässigkeit gewährleistet.

Die elektrisch leitende Verbindungsstelle zwischen den beiden Anschlussleitungen ist vorzugsweise in einem Abstand von höchstens 1 - 3 cm vom Verbinder angeordnet.

Weiter bevorzugt ist die elektrisch leitende Verbindungsstelle unmittelbar an den Verbinder angrenzend angeordnet.

Auf diese Weise ergeben sich kurze Anschlüsse und eine vereinfachte Montagemöglichkeit.

Die Anschlussleitungen sind bevorzugt als Litzen ausgeführt.

Gemäß einer weiteren Ausgestaltung der Erfindung kann die mindestens eine Feldspule über eine Drossel an das Y-Kabel angeschlossen sein.

Weitere Merkmale und Vorteile der Erfindung ergeben sich aus der nachfolgenden Beschreibung bevorzugter Ausführungsbeispiele unter Bezugnahme auf die Zeichnung. Es zeigen:
- Fig. 1: eine Schaltung eines erfindungsgemäßen Universalmotors;
- Fig. 2: eine perspektivische Ansicht des Stators des Universalmotors gemäß Fig. 1 mit bereits montierten Polpaketen und Anschlussleitungen mit Y-Kabeln;
- Fig. 3: ein Y-Kabel in vergrößerter Darstellung im Anlieferungszustand vor der Montage;
- Fig. 4: ein weiteres Y-Kabel vor der Montage mit ersten Schrumpfschläuchen;
- Fig. 5: eine Abwandlung des Y-Kabels gemäß Fig. 4 ohne Schrumpfschläuche;
- Fig. 6: ein Schaltbild eines Universalmotors mit parallel geschalteten Feldspulen und Anschlüssen gemäß dem Stand der Technik und
- Fig. 7: eine vereinfachte Prinzipdarstellung eines Stanzgitters, das alternativ anstelle eines Y-Kabels zum Anschluss verwendet werden kann, wobei die Ausführung jedoch nicht von der Erfindung umfasst ist.

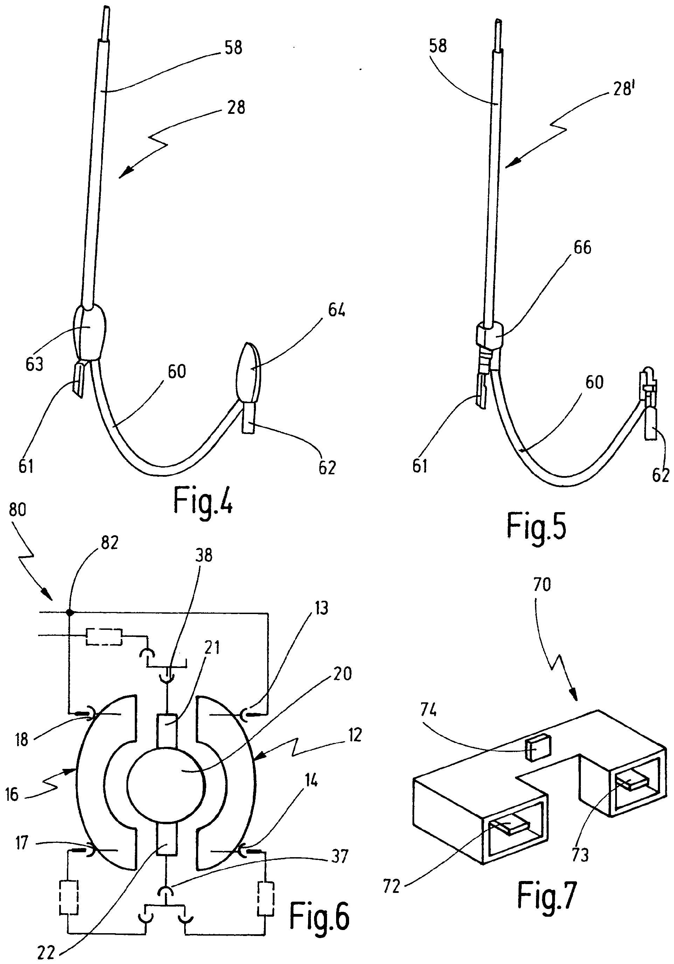

In Fig. 6 ist ein Universalmotor mit zwei parallel geschalteten Feldspulen gemäß dem Stand der Technik dargestellt, wie er durch Benutzung bekannt geworden ist. Der Universalmotor 80 gemäß dem Stand der Technik weist zwei Feldspulen 12, 16 auf, die jeweils mit Kontaktanschlüssen 13, 14 und 17, 18 versehen sind. Ein Anker 20 ist mit Bürsten 21, 22 versehen, die über Kohlehalter 37, 38 angeschlossen sind. Hierbei sind die Anschlussleitungen nach der Montage der Feldspulen 12, 16 durch Einpressen in den Stator zweimal an den Kohlehaltern 37 mittels Steckkontakten befestigt, während auf der gegenüberliegenden Seite schalterseitig bei 82 eine Vercrimpung angebracht werden muss. Zusätzlich muss noch ein Schrumpfschlauch über die Vercrimpung 82 übergezogen werden, um die notwendige Isolierung und einen ausreichenden Staubschutz zu gewährleisten.

Dies hat zur Folge, dass die bekannte Lösung durch den händischen Aufwand relativ teuer ist.

Muss im Reparaturfall ein Polpaket ausgetauscht werden, so muss zunächst die Vercrimpung 82 gelöst werden, bevor das Polpaket aus dem Stator genommen werden kann.

Gegenüber diesem Stand der Technik führt die Erfindung zu einer deutlichen Vereinfachung und einer verbesserten Servicefreundlichkeit.

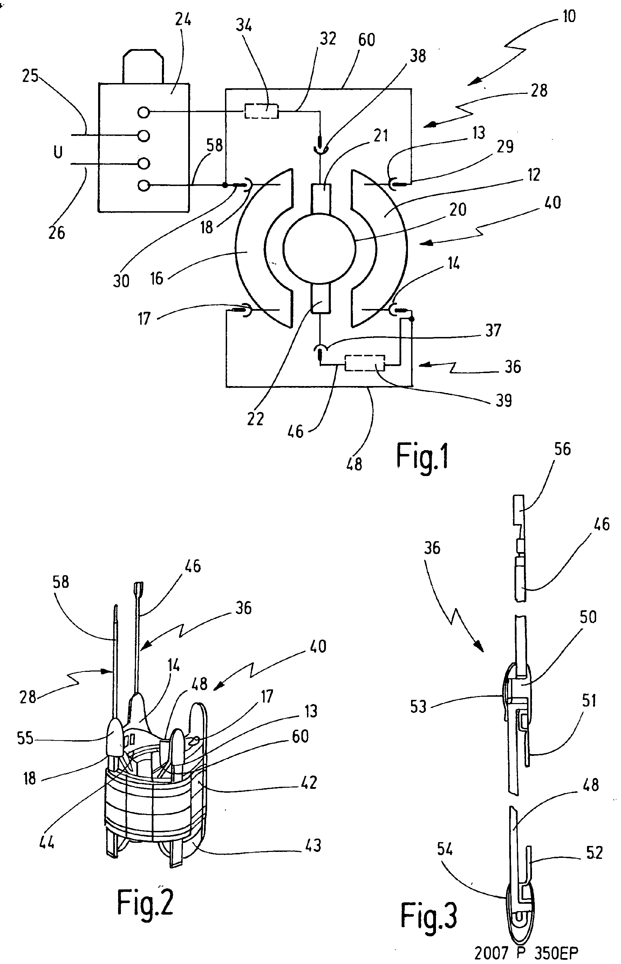

Ein Universalmotor, der mit den erfindungsgemäß verwendeten Y-Kabeln verdrahtet ist, wird im Folgenden anhand der Fig. 1 bis 6 näher beschrieben. Dabei werden für entsprechende Teile entsprechende Bezugsziffern verwendet.

In Fig. 1 ist ein Universalmotor vereinfacht dargestellt und insgesamt mit 10 bezeichnet.

Der Universalmotor 10 umfasst einen Stator 40 mit zwei Feldspulen 12, 16, die zueinander parallel geschaltet sind, sowie einen Anker 20, der mit Bürsten 21, 22 versehen ist, die in Bürstenhaltern 37, 38 aufgenommen sind. Die Feldspulen 12, 16 sind automatisch gewickelt und sind an ihren Enden jeweils mit Kontaktanschlüssen 13, 14 bzw. 17, 18 versehen.

Es sind zwei Y-Kabel 28, 36 vorgesehen, um die Feldspulen 12, 16 anzuschließen und um eine Parallelschaltung der Feldspulen 12, 16 zu bewirken.

Bei dem Y-Kabeln 28, 36 handelt es sich um vorkonfektionierte Kabel, wie sie in den Fig. 3 bis 5 dargestellt sind.

Gemäß Fig. 3 weist das Y-Kabel 36 eine erste Anschlussleitung 46 mit einem Kontaktstecker 56 am ersten Ende auf, wobei am zweiten Ende der ersten Anschlussleitung 46 ein weiterer Kontaktstecker 51 vorgesehen ist. Unmittelbar angrenzend an den Kontaktstecker 51 ist eine zweite Anschlussleitung 48 über eine Vercrimpung 50 elektrisch leitend angeschlossen. Am Ende der zweiten Anschlussleitung 48 befindet sich ein weiterer Kontaktstecker 52, der gleichfalls als Flachstecker ausgeführt ist. Die Vercrimpung 50, die unmittelbar an den Kontaktstecker 51 angrenzt, sowie die Verbindung der zweiten Anschlussleitung 48 mit dem Kontaktstecker 52 sind im Anlieferungszustand mit kleinen Schrumpfschläuchen 53, 54 umschlossen. Da ansonsten die Vercrimpung bzw. die Aufnahme der Anschlussstecker relativ scharfkantig sind, führen die Schrumpfschläuche 53, 54 dazu, dass sich die Steckkontakte besonders einfach handhaben lassen.

In entsprechender Weise besteht gemäß Fig. 4 das Y-Kabel aus einer ersten Anschlussleitung 58, an deren einem Ende ein Flachkontaktstecker 61 aufgenommen ist. Unmittelbar angrenzend an den Kontaktstecker 61 ist eine zweite Anschlussleitung 60 über eine Vercrimpung angeschlossen und von einem Schrumpfschlauch 63 umgeben. Am anderen Ende der zweiten Anschlussleitung 60 ist wiederum ein Flachkontaktstecker 62 vorgesehen, dessen Anschluss von einem Schrumpfschlauch 64 umgeben ist.

Bei der Montage können die Flachkontaktstecker 61, 62 leicht an den Schrumpfschläuchen 63, 64 ergriffen werden, um die Steckverbindung herzustellen.

Fig. 5 zeigt eine Abwandlung des Y-Kabels 28 gemäß Fig. 4, das in Fig. 5 insgesamt mit 28' bezeichnet ist. Der einzige Unterschied zur Ausführung gemäß Fig. 4 besteht darin, dass auf die Anbringung der Schrumpfschläuche 63, 64 verzichtet wurde, so dass die Vercrimpung 66 unmittelbar angrenzend an den ersten Flachkontaktstecker 61 und der Anschluss des zweiten Flachkontaktsteckers 62 unmittelbar zu erkennen sind.

Bei der Montage wird das Y-Kabel 28 schalterseitig zunächst mit Hilfe der beiden Kontaktstecker 61, 62 auf die Anschlussenden 13 bzw. 18 der Feldspulen 12, 16 aufgesteckt und wird sodann mit seiner ersten Anschlussleitung 58 am Motorschalter 24 verbunden.

Das andere Y-Kabel 36 wird mit seinen beiden Kontaktsteckern 51, 52 auf die Anschlussenden der Feldspulen 12, 16 aufgesteckt und kann sodann innerhalb des Blechpaketes 42 des Stators 40 gemäß Fig. 2 montiert werden. Dabei gelangen die Verbindungsleitungen 48, 60, mittels derer die Feldspulen 12, 16 parallel geschaltet werden, in den Bereich der Pollücken zwischen den Wicklungspaketen 43, 44 der Feldspulen 12, 16.

Nach der Montage der Wicklungspakete 43, 44 gemeinsam mit den Y-Kabeln 28, 36 am Statorblechpaket 42 werden die aus Fig. 3 bzw. 4 zu ersehenden ersten Schrumpfschläuche 53, 54 bzw. 63, 64 zusätzlich jeweils mittels eines zweiten Schrumpfschlauches versehen, der in Fig. 2 beispielhaft mit 55 bezeichnet ist. Durch die zweiten Schrumpfschläuche 55 wird eine elektrisch isolierende, dauerhaft staubsichere Abdeckung der Kontaktstellen gewährleistet.

Der komplettierte Stator 40 gemäß Fig. 2 kann als vorgefertigte Baueinheit im Gehäuse des Motors 10 befestigt werden und muss nur noch mit seinen ersten Anschlussleitungen 46 bzw. 58 verbunden werden.

Die erste Anschlussleitung 46 wird am Kohlehalter 37 gemäß Fig. 1 angeschlossen. Die ersten Anschlussleitung 58 des anderen Y-Kabels 28 wird mit dem Motorschalter 24 verbunden. Die andere Kohlebürste 38 ist über eine Anschlussleitung 32 gleichfalls mit dem Netzschalter 24 verbunden.

Optional sind die Kohlebürsten 37, 38 über Drosseln 39 bzw. 34 verbunden. Der Motorschalter 24 ist bei 25, 26 mit der Versorgungsspannung U verbunden.

Im Einschaltzustand liegt die Versorgungsspannung über die Anschlussleitung 32 an einem Kohlehalter 38 und über die erste Anschlussleitung 58 des Y-Kabels 28 an den Anschlussenden 13, 18 der Feldspulen 12, 16, die über die Anschlussleitungen 60 des Y-Kabels 28 parallel geschaltet sind und ist über den anderen Kohlehalter 37 über die erste Anschlussleitung 46 an den beiden anderen Anschlussenden 14, 17 der Feldspulen 12, 16 parallel angeschlossen.

Auf diese Weise ergibt sich ein Reihenschluss über den Anker 20 und die parallel geschalteten Feldspulen 12, 16.

In Fig. 7 ist gemäß einer nicht von der Erfindung umfassten Ausführung beispielhaft ein Stanzgitter 70 angedeutet, wobei es sich um einen Kunststoff-Grundkörper handelt, der mit drei Anschlusskontakten 72, 73, 74 versehen ist, wobei zwei Anschlusskontakte 72, 73 zur Verbindung mit den Feldspulen 12, 16 und zur Parallelschaltung derselben vorgesehen ist. Ein dritter Anschlusskontakt 74 dient zur Verbindung mit dem Netzschalter 24 bzw. dem Kohlehalter 37, 38. Ein derartiges Stanzgitter 70 könnte grundsätzlich anstelle eines Y-Kabels verwendet werden, um mittels entsprechender Verbindungselemente die Verbindungen mit beiden Feldspulen 12, 16 herzustellen.

## Patentansprüche

1. Universalmotor, mit einem Stator (40), an dem mindestens zwei parallel geschaltete Feldspulen (12, 16) aufgenommen sind, wobei zur Parallelschaltung der Feldspulen (12, 16) Anschlussleitungen (48, 60) vorgesehen sind, die am Stator (40) in den Pollücken zwischen den Feldspulen (12, 16) verlegt sind, wobei die Feldspulen (12, 16) jeweils mittels eines Y-Kabels (28, 36) angeschlossen sind, das eine erste Anschlussleitung (46, 58) aufweist, die mit einer zweiten Anschlussleitung (48, 60) über eine elektrische leitende Verbindung (50) verbunden ist, wobei zumindest an einer Seite die erste (46, 58) und die zweite (48, 60) Anschlussleitung mit einem Verbinder (51, 52, 61, 62) versehen sind, **dadurch gekennzeichnet, dass** die Y-Kabel (28, 36) an den Anschlüssen der Verbinder (51, 52, 61, 62) mit ersten Schrumpfschläuchen (53, 54, 63, 64) versehen sind, und dass die am Stator (40) montierten Y-Kabel (28, 36) zusätzlich an der Verbindung (50) zwischen den beiden Anschlussleitungen und der Anschlüsse der Verbinder (51, 52, 61, 62) durch zweite Schrumpfschläuche (55) umschlossen sind.

2. Universalmotor nach einem der vorhergehenden Ansprüche, **dadurch gekennzeichnet, dass** die erste (46, 58) und die zweite (48, 60) Anschlussleitung mit einem Steckverbinder (51, 52, 61, 62) versehen sind.

3. Universalmotor nach Anspruch 1 oder 2, **dadurch gekennzeichnet, dass** die erste (46, 58) und die zweite (48, 60) Anschlussleitung miteinander vercrimpt sind.

4. Universalmotor nach einem der vorhergehenden Ansprüche, **dadurch gekennzeichnet, dass** die elektrisch leitende Verbindungsstelle (50) unmittelbar an den Verbinder (51, 52, 61, 62) angrenzend angeordnet ist.

5. Universalmotor nach einem der vorhergehenden Ansprüche, **dadurch gekennzeichnet, dass** die Anschlussleitungen (46, 58, 48, 60) als Litzen ausgeführt sind.

6. Universalmotor nach einem der vorhergehenden Ansprüche, **dadurch gekennzeichnet, dass** mindestens eine Feldspule (12, 16) über eine Drossel (34, 39) an das Y-Kabel (28, 36) angeschlossen ist.

## Claims

1. Universal motor having a stator (40), on which at least two field coils (12, 16) which are connected in parallel are received, wherein there are provided for the parallel connection of the field coils (12, 16) connection lines (48, 60) which are arranged on the stator (40) in the pole gaps between the field coils (12, 16), wherein the field coils (12, 16) are each connected by means of a Y cable (28, 36) which has a first connection line (46, 58) which is connected to a second connection line (48, 60) via an electrical conductive connection (50), wherein at least at one side the first connection line (46, 58) and the second connection line (48, 60) are provided with a connector (51, 52, 61, 62), **characterised in that** the Y cables (28, 36) are provided on the connections of the connectors (51, 52, 61, 62) with first heat-shrinkable hoses (53, 54, 63, 64), and **in that** the Y cables (28, 36) which are mounted on the stator (40) are further surrounded by second heat-shrinkable hoses (55) at the connection (50) between the two connection lines and the connections of the connectors (51, 52, 61, 62).

2. Universal motor according to any one of the preceding claims, **characterised in that** the first connection line (46, 58) and the second connection line (48, 60) are provided with a plug type connector (51, 52, 61, 62).

3. Universal motor according to claim 1 or 2, **characterised in that** the first connection line (46, 58) and the second connection line (48, 60) are crimped to each other.

4. Universal motor according to any one of the preceding claims, **characterised in that** the electrically conductive connection location (50) is arranged directly adjacent to the connectors (51, 52, 61, 62).

5. Universal motor according to any one of the preceding claims, **characterised in that** the connection lines (46, 58, 48, 60) are constructed as strands.

6. Universal motor according to any one of the preceding claims, **characterised in that** at least one field coil (12, 16) is connected to the Y cable (28, 36) via a throttle (34, 39).

## Revendications

1. Moteur universel avec un stator (40) sur lequel au moins deux bobines de champ (12, 16) montées parallèlement sont reçues, dans lequel pour le circuit parallèle des bobines de champ (12, 16) sont prévues des conduites de raccordement (48, 60) qui sont posées sur le stator (40) dans les espaces interpolaires entre les bobines de champ (12, 16), dans lequel les bobines de champ (12, 16) sont raccordées respectivement au moyen d'un câble Y (28, 36) qui présente une première conduite de raccordement (46, 58) qui est raccordée à une seconde conduite de raccordement (48, 60) par le biais d'une liaison (50) électroconductrice, dans lequel au moins sur un côté la première (46, 58) et la seconde (48, 60) conduite de raccordement sont pourvues d'un connecteur (51, 52, 61, 62), **caractérisé en ce que** les câbles Y (28, 36) sont pourvus sur les raccords des connecteurs (51, 52, 61, 62) de premiers tuyaux thermorétractables (53, 54, 63, 64), et que les câbles Y (28, 36) montés sur le stator (40) sont entourés en outre sur la liaison (50) entre les deux conduites de raccordement et les raccords de connecteurs (51, 52, 61, 62) par des seconds tuyaux thermorétractables (55).

2. Moteur universel selon l'une quelconque des revendications précédentes, **caractérisé en ce que** la première (46, 58) et la seconde (48, 60) conduite de raccordement sont pourvues d'un connecteur enfichable (51, 52, 61, 62).

3. Moteur universel selon la revendication 1 ou 2, **caractérisé en ce que** la première (46, 58) et la seconde (48, 60) conduite de raccordement sont serties l'une avec l'autre.

4. Moteur universel selon l'une quelconque des revendications précédentes, **caractérisé en ce que** le point de liaison (50) électroconducteur est agencé de manière directement contiguë au connecteur (51, 52, 61, 62).

5. Moteur universel selon l'une quelconque des revendications précédentes, **caractérisé en ce que** les conduites de raccordement (46, 58, 48, 60) sont réalisées en tant que torons.

6. Moteur universel selon l'une quelconque des revendications précédentes, **caractérisé en ce qu'**au moins une bobine de champ (12, 16) est raccordée par le biais d'un étranglement (34, 39) au câble Y (28, 36).
